# EUROPÄISCHE PATENTANMELDUNG

(11) **EP 3 278 921 A1**
(43) Veröffentlichungstag der Anmeldung: **07.02.2018**
(21) Anmeldenummer: 17000936.9
(22) Anmeldetag: 01.06.2017
(51) Int. Cl.: B23K 37/04, B23K 26/38, B23K 26/16, B23K 26/08, B23K 26/70, B23K 101/18

(54) **BEARBEITUNGSVORRICHTUNG**

(30) Priorität: 26.07.2016 DE 102016008943
(71) Anmelder: Held, Gunnar, 63150 Heusenstamm (DE)
(72) Erfinder: Held, Gunnar, 63150 Heusenstamm (DE)
(74) Vertreter: Grimm, Ekkehard

(57) **Zusammenfassung**

Die Erfindung betrifft eine Bearbeitungsvorrichtung für große Werkstücke mit mindestens einer oberhalb einer Schneidauflage positionierten Strahlenquelle und mit einer unterhalb der Schneidauflage im Bereich einer Bearbeitungszone positionierten Schneidabfall-Auffangvorrichtung. Die Schneidauflage bildet einen Teilbereich einer bandförmigen Fördereinrichtung, die um mindestens zwei Umlenkeinrichtungen endlos umlaufend geführt ist. Der der Strahlenquelle zugewandte Teil bildet einen Obertrum und der abgewandte Teil bildet einen Untertrum. Der Obertrum ist zwischen den zwei Umlenkeinrichtungen in einem Teilbereich, der der Bearbeitungszone für das Werkstück zugeordnet ist, aus der Bearbeitungsebene nach unten zu dem Untertrum hin durch mindestens drei weitere Umlenkeinrichtungen umgelenkt. Die Schneidabfall-Auffangvorrichtung ist oberhalb des Obertrums angeordnet und von dem über die mindestens drei weiteren Umlenkeinrichtungen umgelenkten Teile des Obertrums umgeben. Die drei Umlenkeinrichtungen sind, miteinander gekoppelt, parallel zu der Bearbeitungsebene verschiebbar angeordnet und die Schneidabfall-Auffangvorrichtung ist parallel zu der Bearbeitungsebene verschiebbar mit den weiteren Umlenkeinrichtungen gekoppelt.

## Beschreibung

Die Erfindung betrifft eine Bearbeitungsvorrichtung zum Bearbeiten von großen, vorzugsweise plattenförmigen, Werkstücken mittels einer Strahlenquelle, insbesondere mittels einer Laser-Strahlenquelle.

Soweit in den vorliegenden Unterlagen eine Strahlenquelle eingesetzt wird, um die Werkstücke zu bearbeiten, kann alternativ auch ein Plasmastrahl, ein autogener Schneidstrahl, ein Messer oder eine Fräse eingesetzt werden, ohne den Schutzbereich der Erfindung zu verlassen. Folglich kann sowohl in den Ansprüchen als auch in der Beschreibung die Angabe "Strahlenquelle" durch eine oder mehrere dieser aufgezählten Möglichkeiten ersetzt werden.

Werkstücke, insbesondere großformatige Werkstücke, die mit einer Strahlenquelle, insbesondere einer Laser-Strahlenquelle, bearbeitet werden sollen, werden hierzu auf einer Schneidauflage, die eine Bearbeitungsebene für das Werkstück festlegt, positioniert. Besonders in solchen Fällen, bei denen die Werkstücke fortlaufend zu bearbeiten sind, wird eine bandförmige Fördereinrichtung eingesetzt, die die zu bearbeitenden Werkstücke durch die Bearbeitungszone führen. In einigen Fällen wird die Fördereinrichtung in der Bearbeitungszone angehalten und die Strahlenquelle oder der Strahl der Strahlenquelle über das Werkstück bewegt. Es ist aber auch möglich, dass sich sowohl Fördereinrichtung als auch der Bearbeitungsstrahl relativ zueinander bewegen. Derartige Fördereinrichtungen haben auch den Vorteil, dass ein Bearbeitungsbereich relativ kurz, in Förderrichtung gesehen, gehalten werden kann, indem bereits bearbeitete Abschnitte des Werkstücks aus dem Bearbeitungsbereich herausgefahren werden.

Die bandförmige Fördereinrichtung wird in einigen Fällen um mindestens zwei Umlenkeinrichtungen endlos umlaufend geführt. Der der Strahlenquelle zugewandte Teil des Förderbands zwischen den Umlenkeinrichtungen bildet hierbei einen Obertrum und der der Strahlenquelle abgewandte Teil der Fördereinrichtung zwischen den Umlenkeinrichtungen bildet einen Untertrum.

Um in dem Bearbeitungsbereich Schneidabfälle aufzunehmen, wird eine Schneidabfall-Auffangvorrichtung eingesetzt, die gleichzeitig auch als Strahlfalle für einen Laserstrahl dient, der auf der Unterseite des bearbeiteten Werkstücks austritt.

Die DE 10 2004 034 256 A1 beschreibt eine Vorrichtung zum Schneiden von Blech mit zumindest einer an einem Rahmen aufgenommenen, einen bewegbaren Laser aufweisenden Laserschneidvorrichtung und einer Einrichtung zur Aufnahme eines im Schneidbereich des Laserstrahls befindlichen Blechs. Die Einrichtung zur Aufnahme des Blechs besitzt eine erste Fördereinrichtung in Form eines ersten Förderbands und eine in Transportrichtung nachfolgende zweite Fördereinrichtung in Form eines zweiten Förderbands, die derart zueinander positioniert sind, dass zwischen dem Ende des ersten Förderbands und dem Anfang des zweiten Förderbands eine Öffnung oder freier Bereich verbleibt, wo das Werkstück durch den Laser bearbeitet werden kann. Der Laserstrahl, der bei der Bearbeitung durch das Blech hindurch tritt, gelangt dadurch nicht mit Teilen des ersten oder zweiten Förderbands in Berührung. Die Größe der Öffnung, das bedeutet der Abstand zwischen dem Ende des ersten Förderbands und dem Anfang des zweiten Förderbands, kann dadurch verändert werden, dass die Enden der Förderbänder relativ zueinander zurückgezogen werden, oder die Enden werden aufeinander zugeschoben. Um dies zu erreichen, können die jeweiligen Umlenkeinrichtungen an den Enden des Förderbands in einer Führung verschoben werden. Mit einer solchen Verschiebung wird das jeweilige Förderband verkürzt oder verlängert, wozu das jeweilige Förderband zusätzlich über eine weitere Umlenkeinrichtung, die verschiebbar gehalten ist, umgelenkt wird. Der Laser ist an einem ortsfesten Rahmen gehalten, und der mögliche Bearbeitungsbereich wird durch die Größe des ortsfesten Rahmens festgelegt. In einer weiteren Ausführungsform wird das zu bearbeitende Blech über ein erstes Förderband auf ein zweites Förderband, das dem Bearbeitungsbereich, innerhalb des ortsfesten Rahmens, zugeordnet ist, überführt, während ein drittes Förderband auf der gegenüber liegenden Seite die bearbeiteten Werkstücke aus dem Bearbeitungsbereich abführt. Alle drei Förderbänder sind nicht miteinander gekoppelt. Das mittlere, dem Bearbeitungsbereich zugeordnete Förderband besitzt auf der Oberseite Bürsten zum Aufnehmen des Blechs.

Die WO 2010/085486 A1 beschreibt ein Laserschneidsystem für Bleche. Die Bleche werden über einen ersten Förderer einem Schneidbereich, wo sie bearbeitet werden, zugeführt und über eine zweite Fördereinrichtung abgeführt. Die jeweilige Fördereinrichtung besteht aus einer Mehrzahl Förderbänder, die parallel und mit Abstand zueinander angeordnet sind und zusammen die Auflage für das Blech bilden. Die beiden Fördereinrichtungen sind in dem Bearbeitungsbereich ausreichend voneinander beabstandet, so dass sich die Förderbänder außerhalb des Laserstrahls befinden. In dem Bearbeitungsbereich befindet sich eine ortsfeste Abfallfördereinrichtung, bei der es sich um ein weiteres Förderband handelt, über das Abfallmaterial, das in dem Bearbeitungsbereich anfällt, seitlich abtransportiert wird.

Ein Nachteil, den die bekannten Laserbearbeitungseinrichtungen aufweisen, die vorstehend beschrieben sind, ist derjenige, dass der Bearbeitungsbereich begrenzt ist, entweder durch den ortsfesten Rahmen, innerhalb dem der Laser das Material bearbeitet, oder auch durch die ortsfeste Position der Abfallfördereinrichtung, um Abfallmaterial unterhalb des Bearbeitungsbereichs zu entfernen. Darüber hinaus verwenden die bekannten Laserbearbeitungsvorrichtungen mehrere Transportbänder, um ein zu bearbeitendes Werkstück in die Bearbeitungszone zu überführen und aus der Bearbeitungszone zu entfernen.

Der Erfindung liegt die Aufgabe zugrunde, zumindest einen Teil der vorstehend angegebenen Nachteile des Stands der Technik zu beseitigen. Weiterhin soll die Bearbeitungsvorrichtung einen großen Bearbeitungsbereich, insbesondere von langen Werkstücken, ermöglichen.

Gelöst wird diese Aufgabe durch eine Bearbeitungsvorrichtung gemäß Anspruch 1. Vorteilhafte Ausgestaltungen der Bearbeitungsvorrichtung sind in den abhängigen Ansprüchen angegeben.

Die Bearbeitungsvorrichtung ist insbesondere zum Bearbeiten von großen, langen und vorzugsweise band- oder plattenförmigen Werkstücken einsetzbar. Solche band- oder plattenförmigen Werkstücke können von einem Coil abgezogen und ggf. in vorgegebene Längen für die weitere Bearbeitung unterteilt werden. Die Vorrichtung umfasst eine bandförmige Fördereinrichtung mit einem Förderband, das um mindestens zwei Umlenkeinrichtungen endlos umlaufend geführt ist. Der obere Teil des Förderbands, der Obertrum, ist der Strahlenquelle zugewandt, während der Untertrum derjenige Teil ist, der von der Strahlenquelle abgewandt ist. Der Abstand zwischen dem Obertrum und dem Untertrum wird durch den Durchmesser der Umlenkeinrichtungen festgelegt. Allerdings ist auch vorgesehen, dass an den jeweiligen Enden des Förderbands die Umlenkung durch zwei oder mehr Umlenkeinrichtungen erfolgt, so dass auch mit Umlenkrollen eines kleineren Durchmessers ein erforderlicher Abstand zwischen Obertrum und Untertrum erreicht werden kann. Durch die Oberseite des Obertrums wird eine Transport- und Bearbeitungsebene für das Werkstück festgelegt.

Der Obertrum ist zwischen den mindestens zwei Umlenkeinrichtungen in einem Teilbereich, der der Bearbeitungszone für das Werkstück zugeordnet ist, aus der Bearbeitungsebene nach unten zu dem Untertrum hin durch mindestens drei weitere Umlenkeinrichtungen umgelenkt, so dass in einer Seitenansicht auf das Förderband dieses aus der Bearbeitungsebene nach unten geführt wird und ausreichend von der Bearbeitungsebene entfernt ist. Innerhalb dieses Bereichs befindet sich eine Schneidabfall-Auffangvorrichtung. Folglich ist diese Schneidabfall-Auffangvorrichtung oberhalb des Obertrums angeordnet und ist von dem über die mindestens drei weiteren Umlenkeinrichtungen umgelenkten Teil des Obertrums umgeben.

Die mindestens drei Umlenkeinrichtungen, über die der Obertrum aus der Bearbeitungsebene nach unten zu dem Untertrum hin umgelenkt wird, sind parallel zu der Bearbeitungsebene verschiebbar, wobei sie in ihrer Verschiebebewegung miteinander gekoppelt sind.

Auch die Schneidabfall-Auffangeinrichtung ist parallel zu der Bearbeitungsebene verschiebbar und ist mit der Bewegung der weiteren Umlenkeinrichtungen gekoppelt. Über einen geeigneten Antrieb kann in dieser Anordnung der Bearbeitungsbereich, dem die Schneidabfall-Auffangvorrichtung zugeordnet ist, entlang der durch das Obertrum festgelegten Bearbeitungsebene verschoben werden.

Dadurch wird der mögliche Bearbeitungsbereich auf die Länge des Transportbands ausgedehnt.

Durch die Verschiebbarkeit der Auffangvorrichtung kann diese der Position der Schneideinrichtung folgen, so dass sich die Auffangvorrichtung immer unter dem Laser befindet.

Es ist vorgesehen, dass auch die Position der Strahlenquelle, beispielsweise eines Lasers, oder auch mehrerer Laser, für die Bearbeitung eines Werkstücks entlang des Transportbands verändert werden kann. Hierzu ist bevorzugt die Verschiebebewegung der Strahlenquelle mit der Änderung der Position der weiteren Umlenkeinrichtungen und der Schneidabfall-Auffangvorrichtung gekoppelt.

Ein weiterer Vorteil der Bearbeitungsvorrichtung ist darin zu sehen, dass der Bearbeitungsbereich, in dem die Strahlenquelle das Werkstück bearbeitet, sehr schmal, in Transportrichtung der Fördereinrichtung gesehen, gehalten werden kann, da die Position des Bearbeitungsbereichs mit der Bearbeitungsposition des Bearbeitungsstrahls auf dem Werkstück verändert werden kann. Hierdurch kann der Bereich, in dem das Werkstück nicht durch den Obertrum des Transportbands gestützt wird, sehr klein gehalten werden. Da die Position der Schneidabfall-Auffangvorrichtung mit der Veränderung des Bearbeitungsbereichs geändert wird, ist sichergestellt, dass die Schneidabfälle unterhalb des Werkstücks aufgefangen werden.

Obwohl die Fördereinrichtung als eine solche mit einem Förderband beschrieben wird, ist auch vorgesehen, das Förderband in mehrere parallel zueinander angeordnete schmale Förderbänder zu unterteilen, die gemeinsam die Bearbeitungsebene festlegen.

Falls nur drei weitere Umlenkeinrichtungen eingesetzt werden, werden diese so positioniert, dass, in einer Seitenansicht auf das Transportband gesehen, der Obertrum in dem der Bearbeitungszone zugeordneten Bereich V-förmig verläuft.

Falls mindestens vier weitere Umlenkeinrichtungen eingesetzt werden, werden diese so positioniert, dass der Obertrum, in einer Seitenansicht gesehen, in dem der Bearbeitungszone zugeordnete Teilbereich U-förmig oder annähernd U-förmig verläuft. Es ist darauf hinzuweisen, dass ein solcher Bandverlauf, ob nun V-förmig oder U-förmig, auch durch mehr als drei oder vier weitere Umlenkeinrichtungen erreicht werden kann. Auch sind andere Bandverläufe des Obertrums in der Bearbeitungszone vorgesehen.

In einer bevorzugten Anordnung sind die der Bearbeitungszone zugeordneten Umlenkeinrichtungen der Fördereinrichtung in einer gemeinsamen Trägereinheit aufgenommen, und die Trägereinheit ist parallel zu der Bearbeitungsebene verschiebbar.

Die Verschiebung der der Bearbeitungszone zugeordneten weiteren Umlenkeinrichtungen wird vorzugsweise mit der Bearbeitungsposition der Strahlenquelle gekoppelt, so dass in den jeweiligen Bearbeitungspositionen der Strahlenquelle der umgelenkte Bereich des Obertrums und die Schneidabfall-Auffangvorrichtung der jeweiligen Bearbeitungsposition zugeordnet ist.

Für die Erfassung der Bearbeitungsposition der Strahlenquelle und die Erfassung der Position der der Bearbeitungszone zugeordneten Umlenkeinrichtung können Positionssensoren eingesetzt werden, um die Position der Strahlenquelle oder auch nur die Position des Bearbeitungsstrahls auf dem Werkstück zu der Position des umgelenkten Bereichs des Obertrums zu korrelieren

Die Bearbeitungsvorrichtung setzt bevorzugt als Strahlenquelle mindestens einen Laser ein, obwohl die Vorrichtung auch in Verbindung mit anderen Strahlenquellen oder Bearbeitungswerkzeugen eingesetzt werden kann.

Auch kann die bandförmige Fördereinrichtung das Werkstück punkt- oder linienförmig tragen, obwohl dies nicht unbedingt erforderlich ist, da das Werkstück in der Bearbeitungszone nicht durch die Fördereinrichtung unterstützt wird.

Das Werkstück kann getaktet oder kontinuierlich, auch in Form einer überlagerten Bewegung, bewegt werden.

Weitere Einzelheiten und Merkmale der Erfindung ergeben sich aus der nachfolgenden Beschreibung von Ausführungsbeispielen anhand der Zeichnung. In der Zeichnung zeigen
- Figuren 1A bis 1C: schematisch eine Bearbeitungsvorrichtung gemäß der Erfindung in drei unterschiedlichen Arbeitspositionen,
- Figuren 2A bis 2C: drei Darstellungen vergleichbar mit denjenigen der Figuren 1A bis 1C, die schematisch weitere Möglichkeiten der Führung des Transportbands im Bereich der Bearbeitungszone über unterschiedliche Anzahlen der eingesetzten Umlenkeinrichtungen zeigen, und
- Figur 3: eine vergrößerte Darstellung der Bearbeitungszone entsprechend der Figuren 1A bis 1C mit weiteren Details, die sich auf die Halterung und Führung der weiteren Umlenkeinrichtungen und der Schneidabfall-Auffangvorrichtung beziehen.

Die Bearbeitungsvorrichtungen, wie sie in den Figuren dargestellt sind, sind für die Bearbeitung von großen, vorzugsweise plattenförmigen, Werkstücken 1 vorgesehen. Diese Werkstücke 1 werden auf einer bandförmigen Fördereinrichtung 2 transportiert, die im Wesentlichen aus einem über vier Umlenkeinrichtungen 3, beispielsweise Umlenkrollen, geführten, endlosen Transportband 4 besteht. Der obere Teil dieses Transportbands 4 wird als Obertrum 5 bezeichnet und bildet eine Schneidauflage 7 für das Werkstück 1, während der untere Teil des Transportbands 4 als Untertrum 6 bezeichnet wird.

Das Transportband 4 wird über die Umlenkeinrichtungen 3, von denen zumindest ein Teil durch einen nicht näher dargestellten Antrieb angetrieben werden kann, in Richtung der Bewegungspfeile 8 bewegt, so dass ein auf dem Obertrum 5 aufliegendes Werkstück 1 einer Bearbeitungszone 9 zugeführt werden kann, in der das Werkstück 1 durch eine Strahlenquelle 10, vorzugsweise durch einen Laser, bearbeitet wird.

In der Bearbeitungszone 9 wird der Obertrum 5 in einem Teilbereich über zwei weitere Umlenkeinrichtungen 11 aus der Bearbeitungsebene, d. h. der Ebene der Scheidauflage 7, nach unten zu dem Untertrum 6 hin um etwa 90° umgelenkt, und wird über zwei weitere Umlenkeinrichtungen 12 jeweils um 90° umgelenkt und so etwa parallel zu der Ebene der Schneidauflage 7 geführt. Unterhalb der Schneidauflage 7 befindet sich im Bereich der Bearbeitungszone 9 eine Schneidabfall-Auffangvorrichtung 13, die in einer Art Behälter ausgeführt ist. Diese Schneidabfall-Auffangvorrichtung 13 dient dazu, Schneidabfälle 16, die beim Bearbeiten des Werkstücks 1 entstehen, aufzufangen.

Wie durch den Bewegungspfeil 14 angedeutet ist, kann die Strahlenquelle 10 parallel zu dem Obertrum 5 bzw. der Schneidauflage 7 für die Bearbeitung des Werkstücks 1 verfahren werden, wozu die Strahlenquelle 10 an einer nicht näher dargestellten Traverse montiert ist. Wie durch den weiteren Bewegungspfeil 15 angedeutet ist, kann auch die Schneidabfall-Auffangvorrichtung 13 parallel zu der Schneidauflage, und entsprechend der die Schneidabfall-Auffangvorrichtung 13 umhüllende, durch die weiteren Umlenkeinrichtungen 11 und 12 geführte Teil des Transportbands 4, verfahren werden.

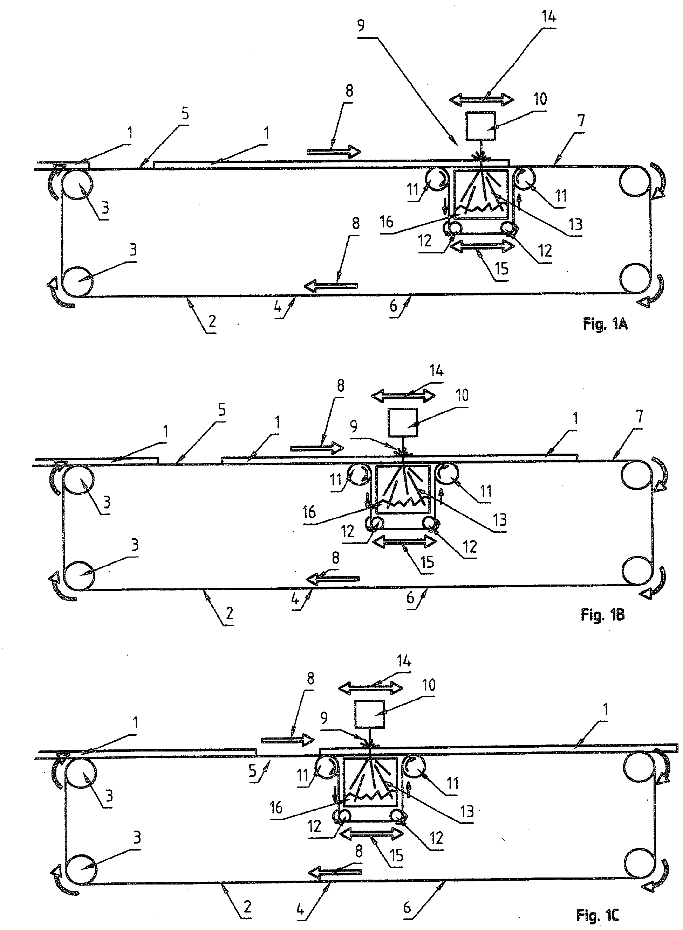

Um eine solche Verfahrbarkeit der Schneidabfall-Auffangvorrichtung 13 und des diese einhüllendes Teils des Transportbands 4 zu ermöglichen, sind, wie in der Figur 3 dargestellt ist, die einen vergrößerten Ausschnitt der Bearbeitungszone der Figuren 1A bis 1C zeigt, sowohl die weiteren Umlenkeinrichtungen 11 und 12 als auch die Schneidabfall-Auffangvorrichtung 13 in einer Trägereinheit 17 gehalten. Diese Trägereinheit 17 besitzt Lagerarme 18 mit Laufrollen 19, die auf einer Laufschiene 20 geführt werden. Die Laufschiene 20 erstreckt sich unterhalb des Ober-trums 5 des Transportbands 4, obwohl eine solche Positionierung der Laufschiene 20 nicht unbedingt erforderlich ist. Die Trägereinheit 17 kann auch so ausgeführt werden, dass die weiteren Umlenkeinrichtung 11, 12 und die Schneidabfall-Auffangvorrichtung 13 seitlich des Transportbands 4 gehalten werden, so dass die Laufschienen 20, von denen nur eine in der seitlichen Ansicht der Figur 3 zu sehen ist, auch oberhalb des Transportbands 4 angeordnet sein können.

Aufgrund der Umlenkung des Transportbands 4 im Bereich der Bearbeitungszone 9 durch die weiteren Umlenkeinrichtung 11 und 12 trifft der Bearbeitungsstrahl bei der Bearbeitung des Werkstücks 1 nicht auf das Transportband 4.

Wie anhand der Figuren 1A bis 1C gezeigt ist, wird durch die Verfahrbarkeit der Strahlenquelle 10 entlang des Transportbands 4 in Richtung des Bewegungspfeils 14 und durch die Verfahrbarkeit der Schneidabfall-Auffangvorrichtung 13 in Richtung des Bewegungspfeils 15 der Bearbeitungsbereich wesentlich erweitert.

So kann, wie die Figur 1A zeigt, die Strahlenquelle 10 ein über das Transportband 4 zugeführtes Werkstück 1 bearbeiten, während gleichzeitig das Werkstück 1 über das Transportband 4 transportiert wird, indem die Strahlenquelle 10 entsprechend den Schneidvorgaben relativ zu dem Werkstück 1 bewegt wird. Gleichzeitig wird die Schneidabfall-Auffangvorrichtung 13 mit dem in der Bearbeitungszone 9 umgelenkten Transportband 4 verfahren, so dass in jeder Bearbeitungsposition der Strahlenquelle 10 der dabei entstehende Schneidabfall 16 durch die Schneidabfall-Auffangvorrichtung 13 aufgefangen wird, wie dies die Figur 1B und 1C zeigen.

Wenn ein Werkstück 1 bearbeitet ist, können Strahlenquelle 10 und Schneidabfall-Auffangvorrichtung 13 unmittelbar zu dem nächsten Werkstück 1 verfahren werden, so dass keine Leerlaufzeiten bei der Bearbeitung der aufeinanderfolgenden Werkstücke 1 auftreten.

Obwohl die Bearbeitungsvorrichtung dahingehend beschrieben ist, dass sowohl Strahlenquelle 10 (z. B. Laser) als auch der umgelenkte Bereich des Obertrums 5 des Transportbands 4 verfahren werden können, und dies zusätzlich zu einer überlagerten Bewegung des Transportbands 4 selbst, können entsprechend den Bearbeitungsvorgaben und entsprechend den Bearbeitungszeiten die einzelnen Bewegungen unterbrochen werden.

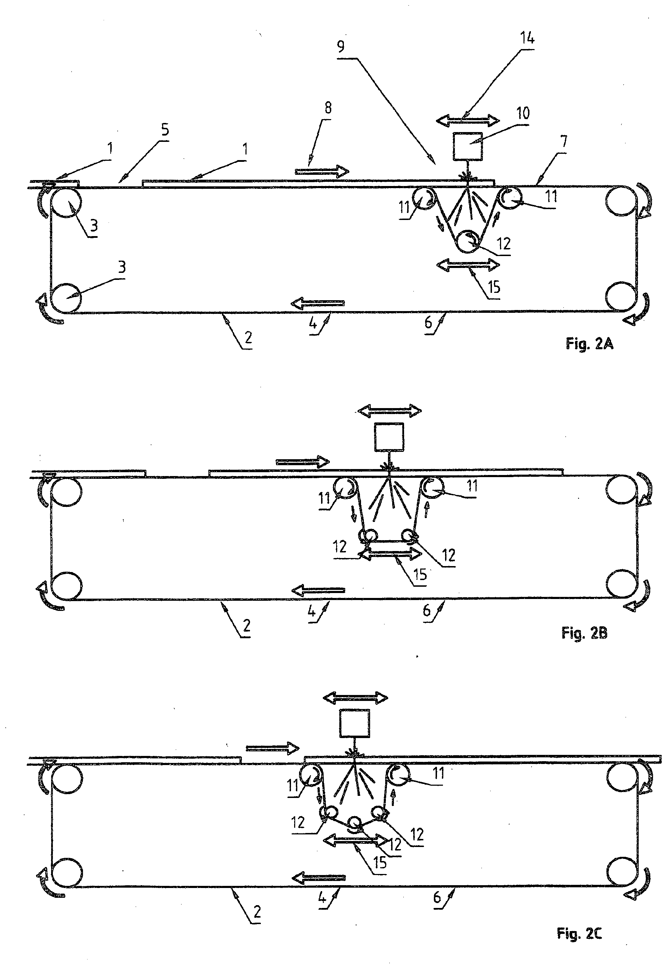

Die Figuren 2A bis 2C zeigen nun drei Darstellungen, die mit denjenigen der Figuren 1A bis 1C vergleichbar sind, die schematisch weitere Möglichkeiten der Führung des Transportbands 4 im Bereich der Bearbeitungszone 9 über die weiteren Umlenkeinrichtungen 11, 12 zeigen. Allerdings ist in den Darstellungen der Figuren 2A bis 2C die Schneidabfall-Auffangvorrichtung 13 weggelassen, um die Führung des Transportbands 4 deutlicher darzustellen.

Allerdings wird auch bei den Ausführungen der Figuren 2A bis 2C eine Schneidabfall-Auffangvorrichtung 13 eingesetzt, die so positioniert und gehalten werden kann, wie dies in den Figuren 1A bis 1C sowie Figur 3 dargestellt und erläutert ist.

Während in den Figuren 1A bis 1C der Obertrum 5 des Transportbands 4 über die weiteren Umlenkeinrichtungen 11 und 12 so umgelenkt und geführt wird, dass, in einer Seitenansicht gesehen, der Obertrum 5 in dem der Bearbeitungszone 9 zugeordneten Teilbereich U-förmig oder annähernd U-förmig verläuft, wird in der Anordnung der Figur 2A neben den zwei oberen Umlenkeinrichtungen 11, die den Obertrum 5 des Transportbands 4 in Richtung der Untertrums 6 umlenken, nur eine weitere Umlenkeinrichtung 12 eingesetzt, so dass, in einer Seitenansicht gesehen, der Obertrum 5 in dem der Bearbeitungszone 9 zugeordneten Bereich V-förmig verläuft.

Die Ausführungsform, wie sie in der Figur 2B gezeigt ist, verwendet wiederum vier weitere Umlenkeinrichtungen 11, 12, wobei allerdings die unteren, weiteren Umlenkeinrichtungen 12 in einem geringeren Abstand zueinander positioniert sind als die oberen Umlenkeinrichtungen 11, so dass, gegenüber den Ausführungsformen der Figuren 1A bis 1C, der durch das Transportband 4 umhüllte Bereich zu dem Untertrum 6 hin schmaler wird.

Schließlich zeigt die Ausführungsform der Figur 2C eine weitere Anordnung zur Führung des Transportbands 4 in der Bearbeitungszone 9, bei der neben den zwei oberen, weiteren Umlenkeinrichtungen 11 drei untere, weitere Umlenkeinrichtungen 12 verwendet werden.

Über nicht dargestellte Positionssensoren kann vorteilhafterweise die Verschiebung der der Bearbeitungszone 9 zugeordneten weiteren Umlenkeinrichtungen 11, 13 bzw. der Trägereinheit 14, in der die Umlenkeinrichtungen 11, 13 gehalten sind, mit der Bearbeitungsposition der Strahlenquelle 10 gekoppelt werden. Ebenso kann eine Bewegung der Trägereinheit 14 und der Strahlenquelle 10 mit der Bewegung des Transportbands 4 abgestimmt werden.

Es ist auch vorgesehen, dass die bandförmige Fördereinrichtung 2 das Werkstück 1 punkt- oder linienförmig trägt.

## Patentansprüche

1. Bearbeitungsvorrichtung zum Bearbeiten von großen, vorzugsweise band- oder plattenförmigen, Werkstücken (1)
mit mindestens einer oberhalb einer Schneidauflage (7), die eine Bearbeitungsebene für das Werkstück (1) festlegt und dieses trägt, positionierten Strahlenquelle (10) und mit einer unterhalb der Schneidauflage (7) im Bereich einer Bearbeitungszone (9) positionierten, auch als Strahlfalle wirkenden Schneidabfall-Auffangvorrichtung (13),
wobei die Schneidauflage (7) zumindest einen Teilbereich einer bandförmigen Fördereinrichtung (2), die um mindestens zwei Umlenkeinrichtungen (3) endlos umlaufend geführt ist, bildet, wobei der der Strahlenquelle (10) zugewandte Teil der Fördereinrichtung (2) zwischen den Umlenkeinrichtungen (3) einen Obertrum (5) bildet und der der Strahlenquelle (10) abgewandte Teil der Fördereinrichtung (2) zwischen den Umlenkeinrichtungen (3) einen Untertrum (6) bildet,
**dadurch gekennzeichnet,**
**dass** der Obertrum (5) zwischen den mindestens zwei Umlenkeinrichtungen (3) in einem Teilbereich, der der Bearbeitungszone (9) für das Werkstück (1) zugeordnet ist, aus der Bearbeitungsebene nach unten zu dem Untertrum (6) hin durch mindestens drei weitere Umlenkeinrichtungen (11, 12) umgelenkt ist,
**dass** die Schneidabfall-Auffangvorrichtung (13) oberhalb des Obertrums (5) angeordnet ist und von dem über die mindestens drei weiteren Umlenkeinrichtungen (11, 12) umgelenkten Teile des Obertrums (5) umgeben ist, und
**dass** die mindestens drei Umlenkeinrichtungen (11, 12), miteinander gekoppelt, parallel zu der Bearbeitungsebene verschiebbar angeordnet sind und die Schneidabfall-Auffangvorrichtung (13) parallel zu der Bearbeitungsebene verschiebbar mit den weiteren Umlenkeinrichtungen (11, 12) gekoppelt ist.

2. Bearbeitungsvorrichtung nach Anspruch 1, **dadurch gekennzeichnet, dass** in einer Seitenansicht gesehen der Obertrum (5) in dem der Bearbeitungszone (9) zugeordneten, durch die weiteren Umlenkeinrichtungen (11, 12) umgelenkten Teilbereich V-förmig verläuft.

3. Bearbeitungsvorrichtung nach Anspruch 1, **dadurch gekennzeichnet, dass** der der Bearbeitungszone (9) zugeordnete Teilbereich des Obertrums (5) durch mindestens vier weitere Umlenkeinrichtungen (11, 12) umgelenkt ist.

4. Bearbeitungsvorrichtung nach Anspruch 3 **dadurch gekennzeichnet, dass** in einer Seitenansicht gesehen der Obertrum (5) in dem der Bearbeitungszone (9) zugeordneten Teilbereich U-förmig oder annähernd U-förmig verläuft.

5. Bearbeitungsvorrichtung nach einem der Ansprüche 1 bis 4, **dadurch gekennzeichnet, dass** die der Bearbeitungszone (9) zugeordneten Umlenkeinrichtungen (11, 12) der Fördereinrichtung (2) in einer gemeinsamen Trägereinheit (17) aufgenommen sind, wobei die Trägereinheit (17) parallel zu der Bearbeitungsebene verschiebbar ist.

6. Bearbeitungsvorrichtung nach Anspruch 5, **dadurch gekennzeichnet, dass** die Verschiebung der der Bearbeitungszone (9) zugeordneten weiteren Umlenkeinrichtungen (11, 12) mit der Bearbeitungsposition der Strahlenquelle (10) gekoppelt ist.

7. Bearbeitungsvorrichtung nach Anspruch 6, **dadurch gekennzeichnet, dass** Positionssensoren für die Erfassung der Bearbeitungsposition der Strahlenquelle (10) und die Erfassung der Position der der Bearbeitungszone (9) zugeordneten Umlenkeinrichtung (11, 12) eingesetzt sind.

8. Bearbeitungsvorrichtung nach einem der Ansprüche 1 bis 7, **dadurch gekennzeichnet, dass** die Strahlenquelle (10) durch einen Laser gebildet ist.

9. Bearbeitungsvorrichtung nach einem der Ansprüche 1 bis 8, **dadurch gekennzeichnet, dass** die bandförmige Fördereinrichtung (2) das Werkstück (1) punkt- oder linienförmig trägt.
